# EUROPÄISCHE PATENTSCHRIFT

(11) **EP 4 279 769 B1**
(45) Veröffentlichungstag und Bekanntmachung des Hinweises auf die Patenterteilung: **30.07.2025**
(21) Anmeldenummer: 23168973.8
(22) Anmeldetag: 20.04.2023
(51) Int. Cl.: F16J 15/44, F16J 15/447

(54) **ROSTFEUERUNG MIT EINEM ROSTDURCHFALLTRICHTER**
GRATE STOKER FURNACE WITH A GRATE FUNNEL
FOURNEAU À GRILLE AVEC ENTONNOIR À GRILLE

(30) Priorität: 16.05.2022 DE 102022001707
(43) Veröffentlichungstag der Anmeldung: 22.11.2023
(73) Patentinhaber: Martin GmbH für Umwelt- und Energietechnik, 80807 München (DE)
(72) Erfinder: Martin, Johannes Ulrich, 81247 München (DE); Frei, Christian, 84539 Ampfing (DE)
(74) Vertreter: Castell, Klaus

(56) Entgegenhaltungen:
- CN-U- 208 090 684
- CN-U- 211 951 650
- DE-A1- 102012 213 508
- US-A- 3 827 837
- US-A1- 2012 112 421
- US-A1- 2012 193 875

## Beschreibung

Die Erfindung betrifft Rostfeuerung mit einem Rostdurchfalltrichter und einer Labyrinthdichtung mit einem Dichtungsgehäuse, das in dem Rostdurchfalltrichter angeordnet ist und an dem äußere Scheiben angeordnet sind, und einer Welle, an der innere Scheiben angeordnet sind, wobei die Welle exzentrisch im Dichtungsgehäuse derart bewegbar ist, dass sich die inneren und die äußeren Scheiben radial zueinander bewegen können und dabei in Ausrichtung der Welle überlappen.

Außerdem betrifft die Erfindung einen Verbrennungsrost mit beweglichen Roststufen, die mit einer Welle angetrieben werden.

Es gibt Anwendungsgebiete, bei denen eine Welle durch eine Wand geführt werden muss und einerseits eine Abdichtung an der Wand gefordert ist, und andererseits die Welle exzentrisch gelagert ist, um nicht nur eine Drehbewegung, sondern auch eine exzentrische Bewegung zu übertragen. Eine Labyrinthdichtung für solche Einsatzzwecke zeigt die US 2012-0193875 A1.

Eine derartige Situation liegt beispielsweise auch bei Kesselanlagen vor, bei denen mit einer Welle ein Stufenrost bewegt wird. Die hierbei von außen in die Feuerungsanlage geführte Welle wird exzentrisch bewegt und in Folge des beträchtlichen Temperaturunterschiedes und der unterschiedlichen Medien innerhalb und außerhalb des Feuerraums ist eine sichere Abdichtung zu gewährleisten.

Für derartige Aufgaben ist es bekannt, Wellen mit einer Labyrinthdichtung zu verwenden. Hierbei hat die Welle radial abstehende innere Scheiben und das Gehäuse hat radial abstehende äußere Scheiben, die zwischen den inneren Scheiben angeordnet sind, so dass sich Scheiben der Welle und Scheiben des Gehäuses abwechseln. Dadurch wird verhindert, dass das Medium innerhalb der Kesselanlage nach Außen gerät oder Fremdluft von außen in die Kesselanlage hineingerät.

Vor allem der Staub innerhalb der Kesselanlage führt dazu, dass Staub, der in die Labyrinthdichtung gelangt, sich an den Scheiben ablagert. Dort sich verkrustender Staub verbessert zunächst die Abdichtung, da dadurch alle verbleibenden Restkanäle geschlossen werden. Dies jedoch kann auch die Bewegung der Welle beeinträchtigen und es kann letztlich auch zum Bruch von Scheiben führen, der dann die Funktion der Labyrinthdichtung einschränkt.

Dies hat zur Folge, dass bei derartigen Labyrinthdichtungen die Funktion der Dichtung zunächst immer besser wird und anschließend im Laufe der Lebenszeit wieder schlechter und letztlich Scheiben sogar brechen können, was dazu führt, dass die Dichtung ausgebaut und ersetzt werden muss. Dabei kann die Welle mit ihren Scheiben nicht einfach herausgezogen werden, sondern es müssen die Scheiben am Gehäuse und/oder der Welle vollständig entfernt werden, um eine neue Dichtung einsetzen zu können.

Da dies sehr arbeitsaufwendig ist und in der Regel zur Folge hat, dass die Anlage heruntergefahren werden muss, liegt der Erfindung die Aufgabe zu Grunde, eine derartige Labyrinthdichtung weiterzuentwickeln oder durch eine andere Dichtung zu ersetzen.

Diese Aufgabe wird mit einer Labyrinthdichtung mit den Merkmalen des Patentanspruchs 1 gelöst. Vorteilhafte Weiterbildungen sind Gegenstand der Unteransprüche.

Erfreulicherweise hat sich herausgestellt, dass unter Beibehaltung des Prinzips der Labyrinthdichtung die der Erfindung zu Grunde liegende Aufgabe dadurch gelöst werden kann, dass bei einer gattungsgemäßen Labyrinthdichtung mindestens eine der Scheiben in mehrere Teile geteilt ist. Dies ermöglicht es, bei einem Defekt der Dichtung die inneren und/oder äußeren Scheiben zu teilen und somit leichter entfernen zu können. Auch die neuen Scheiben können als geteilte Scheiben leichter wieder eingesetzt werden. Dies erleichtert die Reparatur beträchtlich.

Vorteilhaft ist, wenn die Scheibe in nur zwei oder drei Teile geteilt ist. Prinzipiell ist es möglich, die Scheibe in viele Teile zu teilen, um sie leichter auszubauen. Gerade größere Scheiben werden eher in mehr Teile geteilt. In der Praxis hat sich jedoch herausgestellt, dass in der Regel eine Teilung in nur zwei oder drei Teile ausreicht.

Je nach Ausführungsform der Labyrinthdichtung kann es ausreichen, dass nur die inneren oder die äußeren Scheiben geteilt sind. In der Praxis ist es jedoch vorteilhaft, wenn die inneren oder die äußeren Scheiben geteilt sind.

Es kann ausreichen, wenn nur eine Scheibe auf der Welle oder am Dichtungsgehäuse angeordnet ist. Vorteilhaft ist es jedoch, wenn mehrere innere Scheiben auf der Welle und mehrere äußere Scheiben am Dichtungsgehäuse in Ausrichtung der Welle abwechselnd gehäusefest und wellenfest angeordnet sind.

Beim Verbinden der Teile der Welle muss darauf geachtet werden, dass die Dicke der Scheibe in Ausrichtung der Welle nicht deutlich zunimmt, da sonst die Abmessungen des Scheibenpaketes der Labyrinthdichtung zu groß werden. Daher wird vorgeschlagen, dass die Teile der Scheibe mit einer hinterschnittenen Verbindung miteinander verbunden sind. Als hinterschnittene Verbindung kann beispielsweise eine Knopflochverbindung oder eine Schwalbenschwanzverbindung eingesetzt werden.

Obwohl derartige Verbindungen auch sehr sicher ausgeführt werden können, ist es für viele Anwendungsbereiche vorteilhaft, wenn die Teile der geteilten Scheiben zur Sicherung mit mindestens einer Schweißheftnaht miteinander verbunden sind.

Weiterhin ist vorteilhaft, wenn das Dichtungsgehäuse eine Reinigungsöffnung aufweist.

Derartige Labyrinthdichtungen eignen sich besonders für die Abdichtung in Kesselanlagen und Rostfeuerungen. Ein bevorzugtes Anwendungsgebiet ist daher das Anordnen des Dichtungsgehäuses in einem Rostdurchfalltrichter.

Insbesondere in einem derartigen Fall, ist es vorteilhaft, wenn die Welle mit einer beweglichen Roststufe in Verbindung steht.

Die der Erfindung zu Grunde liegende Aufgabe wird daher auch mit einem Verbrennungsrost mit den Merkmalen des Anspruchs 12 gelöst.

Ein Ausführungsbeispiel ist in der Zeichnung gezeigt und wird im Folgenden näher beschrieben. Es zeigt die
- Figur 1: einen Schnitt durch eine Labyrinthdichtung,
- Figur 2: eine Draufsicht auf eine geteilte Scheibe,
- Figur 3: eine Seitenansicht der in Figur 2 gezeigten Scheibe,
- Figur 4: einen vergrößerten Ausschnitt aus Figur 2 und
- Figur 5: einen vergrößerten Ausschnitt aus Figur 4 mit der Schweißnaht.

Die Erfindung wird am Beispiel eines Verfahrens zur Instandsetzung von Labyrinthdichtungen an einem Horizontalrost beschrieben. Bei einem Horizontalrost werden die Antriebskräfte für die beweglichen Roststufen über eine Welle 2 in einen unter dem Horizontalrost liegenden Rostdurchfalltrichter 13 übertragen. Da die Welle 2 nicht nur eine Drehbewegung ausführt, sondern sich zusätzlich auch auf einer Kreisbahn bewegt, muss der Wellendurchgang 3 durch den Rostdurchfalltrichter zur Ermöglichung dieser Bewegung deutlich größer als der Durchmesser der Welle ausgenommen sein. Die Abdichtung von der Welle 2 durch die Wand 4 zum Rostdurchfalltrichter 13 erfolgt über eine Lamellendichtung 1. Diese Lamellendichtung 1 weist eine lamellenartige Hintereinanderschaltung mehrerer abwechselnd wellenfest angeordneter innerer Scheiben und gehäusefest angeordneter äußerer Scheiben 6 auf, die als Dichtscheiben sich radial zueinander bewegen können und dabei trotzdem immer überlappen, so dass eine labyrinthartige Abdichtung entsteht.

Bisher wurden bei der Herstellung von Neuanlagen oder bei der Herstellung von Ersatzschwingen die Dichtscheiben bereits bei der Fertigung der Schwingen vor dem Anschweißen des äußeren Antriebhebels 7 auf die Welle 2 geschoben. Anschließend wurde der äußere Antriebshebel 7 auf der Welle platziert und angeschweißt, so dass die montierten Dichtscheiben 5, 6 nicht mehr zerstörungsfrei demontiert werden konnten.

Die Dichtscheiben unterliegen jedoch im Betrieb einem Verschleiß und müssen bei Bedarf ausgetauscht werden. Eine Demontage kann bei einteiligen Dichtscheiben 5, 6 nur unter Zerstörung der montierten Scheiben erfolgen. Die Montage neuer einteiliger Scheiben kann daher entweder nur bei demontierter Welle 2 und demontiertem äußerem Antriebshebel 7 erfolgen oder die Montage musste durch die Zerteilung und das anschließende Zusammenfügen der neuen Scheiben Vorort erfolgen. Die Herstellung der zur Abdichtung erforderlichen Oberflächengüte der zusammengefügten Scheibenhälften ist dabei nur unter erschwerten Bedingungen und einer eingeschränkten Zugänglichkeit möglich. Beide Vorgehensweisen bedingen somit einen nicht unerheblichen Zeit- und Fertigungsaufwand, der außerdem mit fertigungstechnischen Schwierigkeiten verbunden ist.

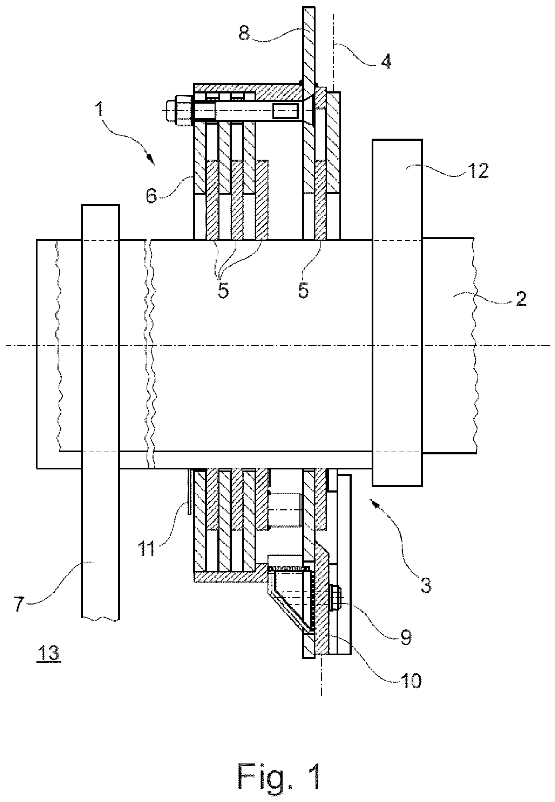

Die Figur 1 zeigt dieses Problem am Dichtungsgehäuse 8, an dem die äußeren Scheiben 6 angeordnet sind, und der Welle 2, an der die inneren Scheiben 5 angeordnet sind. Mit der Schraube 9 wird eine Reinigungsöffnung 10 geschlossen gehalten und gegenüber ist ein Sicherungsblech 11 vorgesehen. Dies ermöglicht es, Kräfte vom Torsionshebel 12 über die Welle 2 auf den Antriebshebel 7 im Rostdurchfalltrichter 13 und von dort weiter auf eine bewegliche Roststufe (nicht gezeigt) zu übertragen.

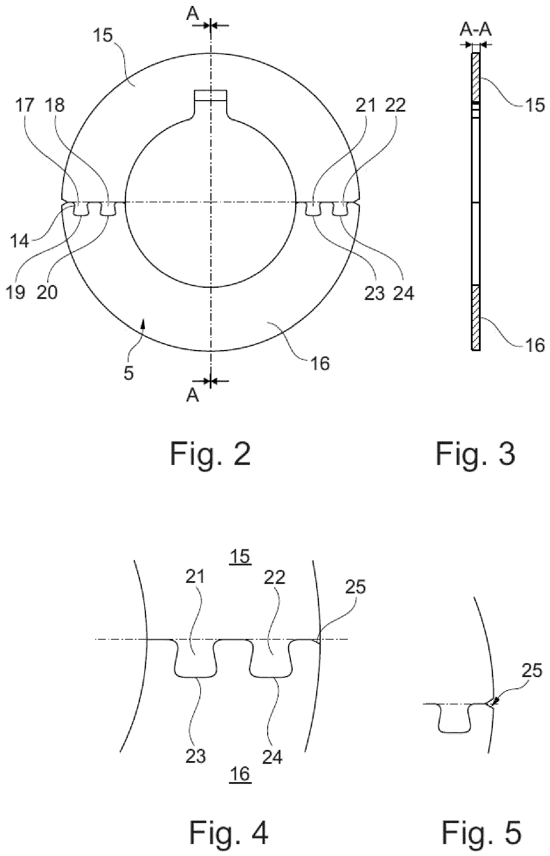

Die Figur 2 zeigt nun eine geteilte innere Scheibe 5, die an der Schnittstelle 14 in eine obere Scheibenhälfte 15 und eine untere Scheibenhälfte 16 geteilt ist. An der Schnittstelle 14 greifen zwei vorstehende Elemente 17 und 18 der oberen Scheibenhälfte 15 in entsprechende Ausnehmungen 19 und 20 der unteren Scheibenhälfte 16. Entsprechend greifen auf der gegenüberliegenden Seite zwei vorstehende Elemente 21 und 22 in entsprechende Ausnehmungen 23 und 24. Damit sind die Scheibenhälften 15 und 16 fest miteinander verbunden. Die Ausnehmungen 19 und 20 sowie 23 und 24 haben Hinterschneidungen, die es verhindern, dass die vorstehenden Elemente 17, 18 und 21, 22 sich aus den Ausnehmungen 19, 20 und 23, 24 lösen.

Zur Sicherung ist jedoch ein Schweißpunkt 25 am radial äußeren Bereich des Verbindungsbereichs 14 zwischen der oberen Scheibenhälfte 15 und der unteren Scheibenhälfte 16 vorgesehen.

## Patentansprüche

1. Rostfeuerung mit einem Rostdurchfalltrichter und einer Labyrinthdichtung (1) mit einem Dichtungsgehäuse (8), das in dem Rostdurchfalltrichter angeordnet ist und an dem äußere Scheiben (6) angeordnet sind, und einer Welle (2), an der innere Scheiben (5) angeordnet sind, wobei die Welle (2) exzentrisch im Dichtungsgehäuse (8) derart bewegbar ist, dass sich die inneren (5) und die äußeren Scheiben (6) radial zueinander bewegen können und dabei in Ausrichtung der Welle (2) überlappen, wobei mindestens eine der Scheiben (5, 6) in mehrere Teile (15, 16) geteilt ist.

2. Rostfeuerung nach Anspruch 1, ***dadurch gekennzeichnet, dass*** die Scheibe (5, 6) in nur zwei Teile (15, 16) geteilt ist.

3. Rostfeuerung nach einem der vorhergehenden Ansprüche, ***dadurch gekennzeichnet, dass*** die inneren und die äußeren Scheiben (5, 6) geteilt sind.

4. Rostfeuerung nach einem der vorhergehenden Ansprüche, ***dadurch gekennzeichnet, dass*** mehrere innere Scheiben (5, 6) auf der Welle (2) und mehrere äußere Scheiben (5, 6) am Dichtungsgehäuse (8) in Ausrichtung der Welle (2) abwechselnd gehäusefest und wellenfest angeordnet sind.

5. Rostfeuerung nach einem der vorhergehenden Ansprüche, ***dadurch gekennzeichnet, dass*** die Teile (15, 16) der Scheibe (5, 6) mit einer hinterschnittenen Verbindung miteinander verbunden sind.

6. Rostfeuerung nach Anspruch 5, ***dadurch gekennzeichnet, dass*** die hinterschnittene Verbindung eine Knopflochverbindung ist.

7. Rostfeuerung nach Anspruch 5, ***dadurch gekennzeichnet, dass*** die hinterschnittene Verbindung eine Schwalbenschwanzverbindung ist.

8. Rostfeuerung nach einem der vorhergehenden Ansprüche, ***dadurch gekennzeichnet, dass*** die Teile zur Sicherung mit mindestens einer Schweißheftnaht (25) miteinander verbunden sind.

9. Rostfeuerung nach einem der vorhergehenden Ansprüche, ***dadurch gekennzeichnet, dass*** das Dichtungsgehäuse (8) eine Reinigungsöffnung (10) aufweist.

10. Rostfeuerung nach einem der vorhergehenden Ansprüche, ***dadurch gekennzeichnet, dass*** das Dichtungsgehäuse (8) in einem Rostdurchfalltrichter (13) angeordnet ist.

11. Rostfeuerung nach einem der vorhergehenden Ansprüche, ***dadurch gekennzeichnet, dass*** die Welle (2) mit einer beweglichen Roststufe in Verbindung steht.

12. Rostfeuerung nach einem der vorhergehenden Ansprüche mit einem Verbrennungsrost und beweglichen Roststufen.

## Claims

1. A grate firing system with a grate fall-through funnel and a labyrinth seal (1) with a seal housing (8) which is disposed in the grate fall-through funnel and on which outer disks (6) are disposed, and a shaft (2) on which inner disks (5) are disposed, wherein the shaft (2) can be moved eccentrically in the seal housing (8) in such a manner that the inner (5) and the outer disks (6) can move radially relative to one another and thereby overlap in alignment with the shaft (2), wherein at least one of the disks (5, 6) is divided into several parts (15, 16).

2. The grate firing system according to claim 1, ***characterized in that*** the disc (5, 6) is divided into only two parts (15, 16).

3. The grate firing system according to one of the preceding claims, ***characterized in that*** the inner and the outer discs (5, 6) are divided.

4. The grate firing system according to one of the preceding claims, ***characterized in that*** several inner discs (5, 6) are disposed on the shaft (2) and several outer discs (5, 6) are disposed on the seal housing (8) in alignment with the shaft (2), in an alternatingly fixed manner.

5. The grate firing system according to one of the preceding claims, ***characterized in that*** the parts (15, 16) of the disc (5, 6) are connected to one another with an undercut connection.

6. The grate firing system according to claim 5, ***characterized in that*** the undercut connection is a buttonhole connection.

7. The grate firing system according to claim 5, ***characterized in that*** the undercut connection is a dovetail connection.

8. The grate firing system according to one of the preceding claims, ***characterized in that*** the parts are connected to one another by at least one tack weld (25) for securing.

9. The grate firing system according to one of the preceding claims, ***characterized in that*** the sealing housing (8) has a cleaning port (10).

10. The grate firing system according to one of the preceding claims, ***characterized in that*** the sealing housing (8) is disposed in a grate fall-through funnel (13).

11. The grate firing system according to one of the preceding claims, ***characterized in that*** the shaft (2) is connected to a movable grating level.

12. The grate firing system according to one of the preceding claims with a combustion grate and movable grating levels.

## Revendications

1. Système de combustion à grille avec une trémie de passage de grille et un joint labyrinthe (1) avec un logement de joint (8) qui est disposé dans la trémie de passage de grille et sur lequel sont disposés des disques extérieurs (6), et un arbre (2) sur lequel sont disposés des disques intérieurs (5), où l'arbre (2) est mobile de manière excentrique dans le logement de joint (8) de telle manière que les disques intérieurs (5) et les disques extérieurs (6) peuvent se déplacer radialement l'un par rapport à l'autre et se chevauchent ainsi dans l'alignement de l'arbre (2), où au moins un des disques (5, 6) est divisé en plusieurs pièces (15, 16).

2. Système de combustion à grille selon la revendication 1, ***caractérisé en ce que*** le disque (5, 6) est divisé en seulement deux pièces (15, 16).

3. Système de combustion à grille selon l'une des revendications précédentes, ***caractérisé en ce que*** les disques intérieurs et extérieurs (5, 6) sont divisés.

4. Système de combustion à grille selon l'une des revendications précédentes, ***caractérisé en ce que*** plusieurs disques intérieurs (5, 6) sont disposés sur l'arbre (2) et plusieurs disques extérieurs (5, 6) sont disposés sur le boîtier d'étanchéité (8) dans l'alignement de l'arbre (2) de manière à être alternativement solidaires du boîtier et solidaires de l'arbre.

5. Système de combustion à grille selon l'une des revendications précédentes, ***caractérisé en ce que*** les pièces (15, 16) du disque (5, 6) sont reliées entre elles par une liaison en contre-dépouille.

6. Système de combustion à grille selon la revendication 5, ***caractérisé en ce que*** la liaison en contre-dépouille est une liaison en boutonnière.

7. Système de combustion à grille selon la revendication 5, ***caractérisé en ce que*** la liaison en contre-dépouille est une liaison en queue d'aronde.

8. Système de combustion à grille selon l'une des revendications précédentes, ***caractérisé en ce que,*** pour la sécurisation, les pièces sont reliées entre elles par au moins une soudure par points (25).

9. Système de combustion à grille selon l'une des revendications précédentes, ***caractérisé en ce que*** le logement de joint (8) présente une ouverture de nettoyage (10).

10. Système de combustion à grille selon l'une des revendications précédentes, ***caractérisé en ce que*** le logement de joint (8) est disposé dans une trémie de passage de grille (13).

11. Système de combustion à grille selon l'une des revendications précédentes, ***caractérisé en ce que*** l'arbre (2) est relié à un étage de grille mobile.

12. Système de combustion à grille selon l'une des revendications précédentes avec une grille de combustion et des étages de grille mobiles.
